# EUROPEAN PATENT SPECIFICATION

(11) **EP 1 871 649 B1**
(45) Date of publication and mention of the grant of the patent: **19.01.2011**
(21) Application number: 05750267.6
(22) Date of filing: 21.04.2005
(51) Int. Cl.: B60T 8/32, B60T 7/10

(54) **HYDRAULIC PARKING BRAKE**
HYDRAULISCHE FESTSTELLBREMSE
FREIN DE STATIONNEMENT HYDRAULIQUE

(43) Date of publication of application: 02.01.2008
(73) Proprietor: Freni Brembo S.p.A., 24035 Curno (Bergamo) (IT)
(72) Inventor: SCHORN, Michael, I-20050 Camparada (IT); TEMPESTINI, Serge, I-24035 Curno (IT); CANTONI, Carlo, I-24020 Gorle (Bergamo) (IT); ONGARETTI, Enrico, Battista, I-24064 Grumello del Monte (Bergamo) (IT)
(74) Representative: Crippa, Paolo Ernesto
(86) International application number: PCT/IT2005/000232
(87) International publication number: WO 2006/111989

(56) References cited:
- US-A- 4 818 039
- US-A- 4 976 500
- US-A- 5 174 637
- US-A- 5 403 076
- US-A- 5 482 133
- US-A1- 2005 001 473

## Description

. The present invention relates to a hydraulic parking brake.

. Hydraulic-actuation parking brakes have already been proposed hydraulic-actuation parking brakes are shown in documents US 4976500 A, US-A-5 174 637A and DE 100 38 786 A1. For example, document DE 100 38 786 A1 discloses an electrical-hydraulic circuit wherein each wheel of a vehicle is associated to a particular brake caliper wherein a cylinder with two pistons, a front and a rear one, acts on the caliper pads. Two different circuits feeding a control fluid are connected to such cylinder: a parking brake circuit and a service brake circuit.

. In the absence of a command for actuating the parking brake, the fluid coming from the service brake acts on the rear piston surface, pushing it and the front piston forward, thus actuating the caliper.

. Following an actuation of the parking brake, the control fluid coming from the corresponding circuit is introduced into an intermediate chamber obtained between the two pistons. The rear piston remains in an inactive rear position, or is made to move back, whereas the front one is pushed forward to a caliper locking position.

. If on the one side such a hydraulic parking brake exhibits the advantage of being electrically rather than mechanically actuated, as in conventional parking brakes, on the other hand it implies a more complex structure of brake calipers as compared to conventional brake calipers.

. Moreover, the splitting into two different hydraulic circuits for feeding the calipers in the practice is complex to manufacture and manage too.

. The object of the present invention is to provide a hydraulic parking brake which allows obtaining the advantages related to a greater simplicity and immediateness of actuation by the user while at the same time being more reliable and easier to manufacture than the hydraulic parking brakes provided so far.

. Such object is achieved with a hydraulic parking brake according to claim 1.

. In practice, thanks to the provision of a pump device comprising inlet selection means that allow its use alternately as a real pump for feeding the calipers with the control fluid at a predetermined pressure (parking brake activated), or as a simple means for the passage of the control fluid arranged between the service brake actuator and the calipers (parking brake deactivated), the hydraulic parking brake according to the present invention uses the same brake calipers actuable by the service brake, therefore calipers of the conventional type and a single fluid delivery line for both circuits.

. The possibility, for the parking brake described herein, of acting on the brake calipers of the service brake offers several advantages.

. The action of the parking brake can be both static, as it conventionally is, and dynamic, that is, with still moving vehicle. In other words, the parking brake can be actuated without any problems even when the vehicle has not stopped yet. This, along with the possibility of actuating the parking brake by simply pressing a button, is especially advantageous in the vehicles that in use are subject to continuous halts, for example delivery vehicles for mail or other items, waste collection or disposal vehicles, service vehicles in airports.

. The action of the parking brake can be advantageously controlled with an ABS system already provided for controlling the action of the service brake, besides an electronic control unit that normally manages the service brake circuit.

. The parking brake is applied to all the wheels of a vehicle, rather than to a pair of wheels, as it normally occurs.

. The pressure of the parking brake sent to the brake calipers is predetermined for the vehicle and can be controlled with pressure sensors.

. If a hydraulic actuator is used as actuating member of the pump device, a pressure accumulator can be advantageously provided on the feeding line of the control fluid to said hydraulic actuator for compensating any parking pressure drops, due for example to the brake cooling.

. Further details and advantages of the parking brake according to the present invention will appear more clearly from the following description of preferred embodiments, made by way of an indicative non-limiting example with reference to the annexed drawings, wherein:

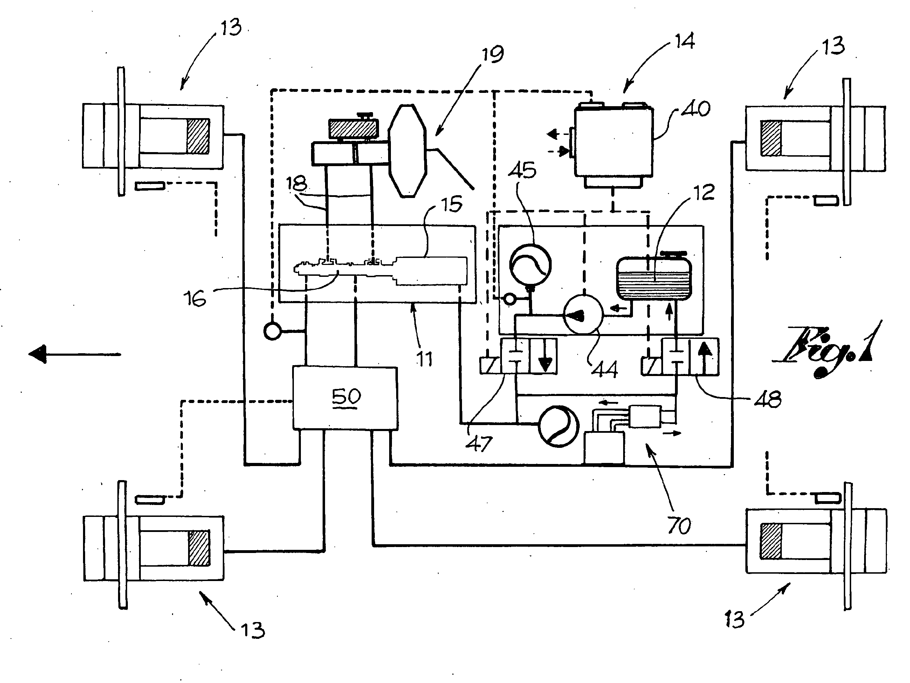

. figure 1 shows a diagram of the parking brake circuit according to the present invention;

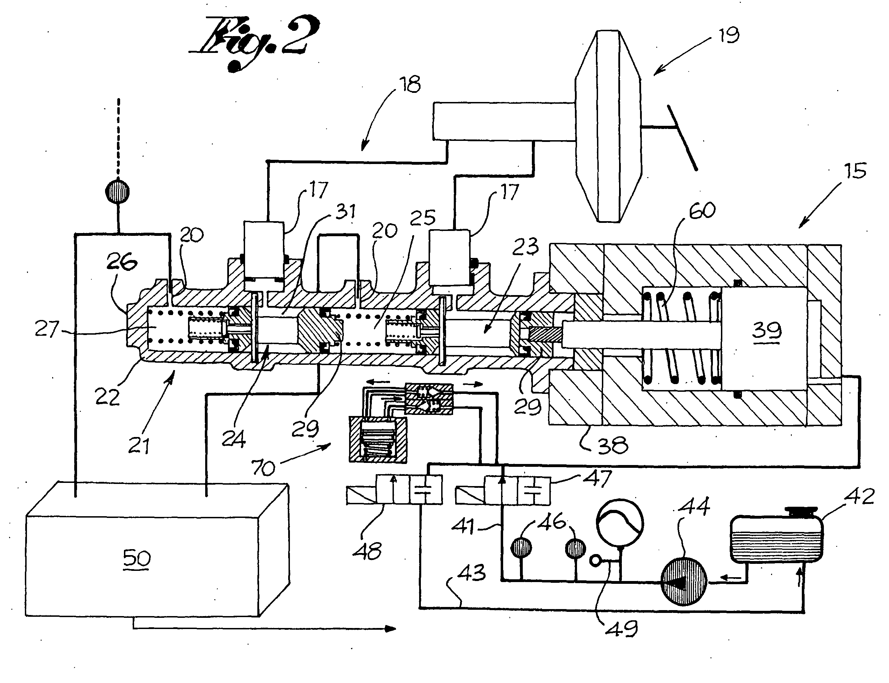

. figure 2 shows a section enlarged view of the pump device of the circuit of figure 1 and of its control means;

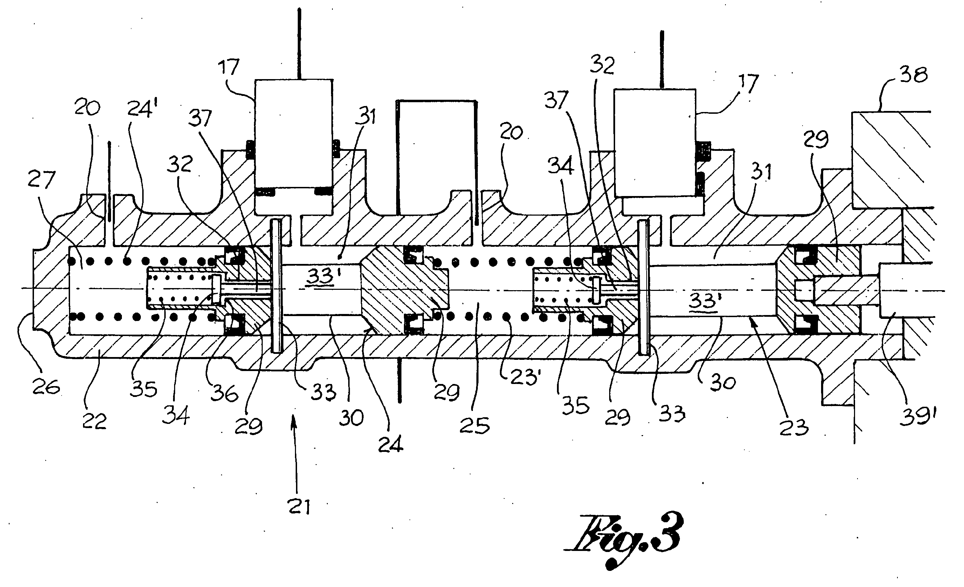

. figure 3 shows a section view of only the hydraulic section of the pump device;

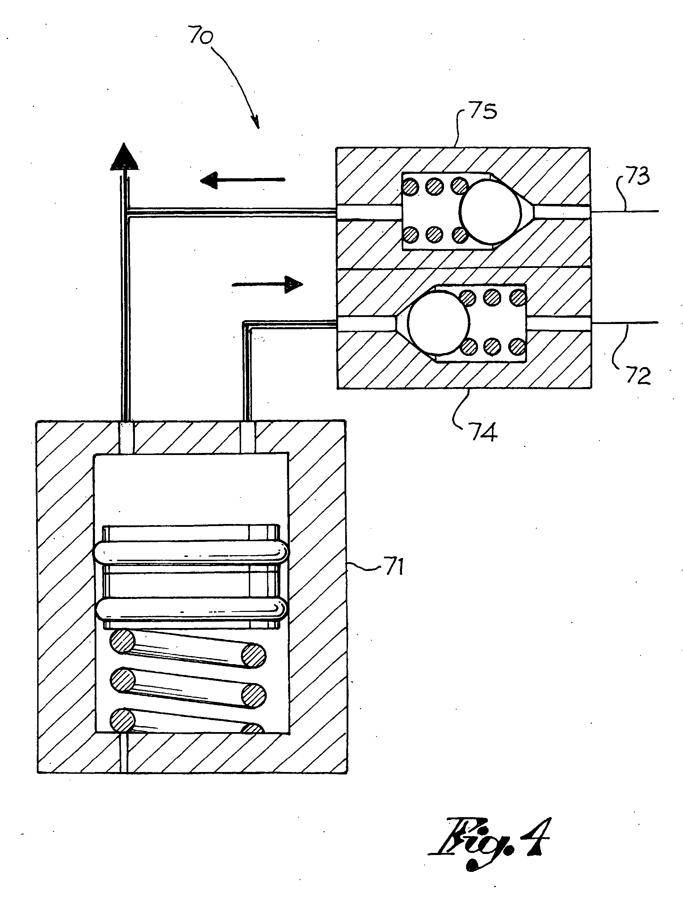

. figure 4 shows a section view of only the overpressure limiting device;

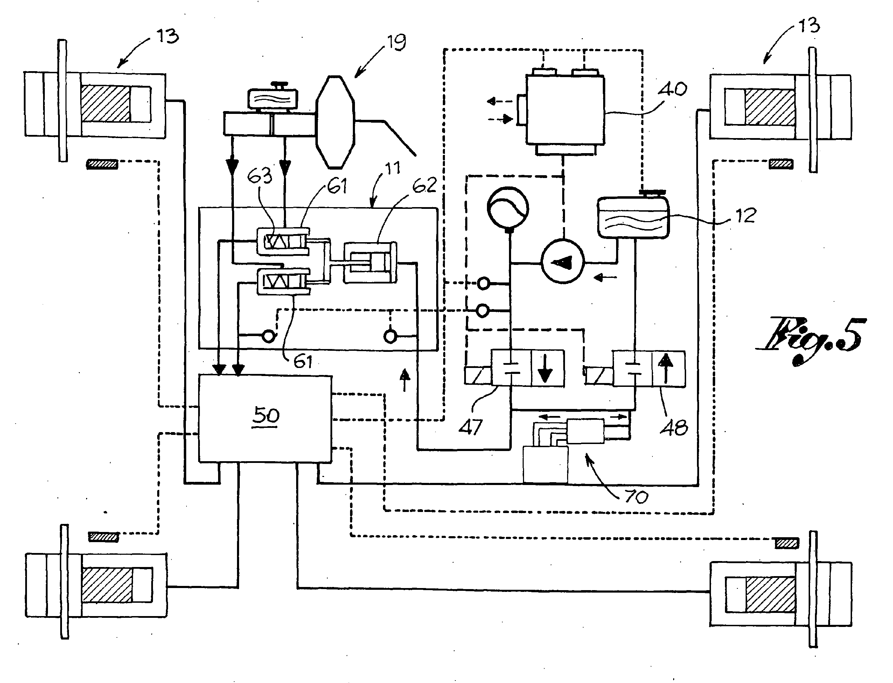

. figure 5 shows a first alternative embodiment of the circuit; and

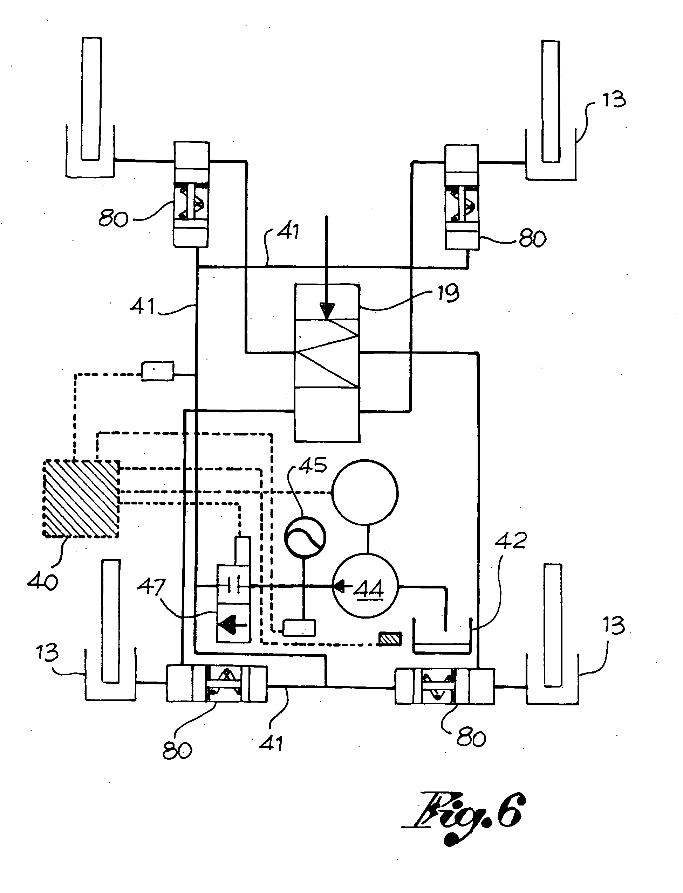

. figure 6 shows a second alternative embodiment of the parking brake circuit.

. In a general embodiment, the parking brake according to the present invention comprises a pump device 11 for feeding at a predetermined pressure a control fluid 12 to at least one brake caliper 13 associated to a vehicle wheel, and control means 14 actuable by a user for activating/deactivating said pump device 11.

. The pump device 11 comprises an actuating member 15 actuable by said control means 14 and a hydraulic section 16 containing the control fluid.

. The hydraulic section is thus defined as it contains, receives and delivers the control fluid, for example oil, to the brake calipers 13, whereas the actuating member 15, even though it preferably is of the hydraulic type as well, as it shall be detailed hereinafter, may even be obtained in a different way.

. The hydraulic section 16 exhibits at least one inlet 17 for the connection to a circuit 18 of the control fluid coming from an actuator of the service brake 19 and at least one outlet 20 towards the at least one brake caliper 13. The hydraulic section 16 of the pump device is further provided with inlet selection means which, when the pump device is activated, are urged by the actuating member 15 to close said at least one inlet 17 for allowing the pump device 11 to exert the predetermined pressure and, when the pump device is deactivated, open said at least one inlet 17 for placing circuit 18 of the control fluid coming from the service brake circuit in fluid communication with the at least one brake caliper 13.

. With reference now to a preferred embodiment illustrated in figures 1 and 2, the pump device 11 is of the type known as tandem pump, wherein the hydraulic section 16 comprises a main cylinder 21 having a body 22 wherein a first and a second piston 23, 24, respectively, are slidingly seated, placed in series and spaced so as to define a first chamber 25 containing the control fluid thereinbetween. The second piston 24 delimits, with a head 26 of the body 22 of the main cylinder, a second chamber 27 containing the control fluid.

. At each of said first and second chamber 25, 27, the body 22 of the main cylinder 21 exhibits a respective outlet 20 towards the brake calipers. For example, the control fluid of the first chamber 25 is used for actuating the rear brake calipers of a vehicle, whereas the control fluid of the second chamber 27 is used for actuating the front brake calipers. Alternatively, advantageously, the control fluid coming from each chamber is used for actuating a caliper of an axle and the opposed caliper associated to the other axle, thus obtaining a crossed connection.

. Advantageously, the fluid coming out of the pump device feeds an ABS unit 50 for the electronic control of the vehicle braking.

. The two pistons 23, 24 are controlled by the actuating member 15 to move between a rear position corresponding to the deactivated pump device 11 and a forward position, corresponding to the activated pump device 11. Normally, said pistons 23, 24 are kept in rear position by first and second elastic means 23', 24' respectively arranged between the two pistons and between head 26 of the main cylinder 21 and the second piston 24.

. Each piston 23, 24 exhibits a body having end portions 29 sealingly coupled with the inner surface of body 22 of the main cylinder, so as to sealingly delimit the first and the second chamber 25, 27, and a reduced-diameter central portion 30. For each piston 23, 24, said end portions 29 define with said central portion 30 an interspace 31 communicating with a respective inlet 17 of the control fluid coming from circuit 18 of the service brake.

. In turn, interspace 31 of each piston 23, 24 communicates with a respective chamber 25, 27 through a passage 32 obtained in each piston at the level of its end portion 29 delimiting said chamber.

. Each piston 23, 24 is associated to respective valve means adapted for opening or closing the respective passage 32, according to the position of the piston themselves inside the main cylinder, as it shall be described hereinafter.

. According to a preferred embodiment, each of said passages 32 communicates with a longitudinal slit 33' obtained in each piston 23, 24 for seating a stop pin 33. Said pin 33 engages in body 22 of the main cylinder for limiting the movement in rear position of the respective piston.

. In each piston 23, 24, the valve means comprise a shutter 34 influenced by respective elastic means 35 for closing a respective valve seat 36 obtained in each passage 32, and a stem 37 that extends from said shutter 34 into said passage 32 towards the respective stop pin 33.

. When pistons 23, 24 are in rear position, stems 37 rest against the respective pins 33 opening the valve seat 36 under the strength of the respective, elastic means 35; when pistons 23, 24 move to forward position, stems 37 separate from the respective pins 33,k thus allowing shutters 34 to close the respective valve seats 36.

. In other words, pistons 23, 24 and the respective valve means 33-37 act as inlet selection means for feeding the control fluid to the brake calipers 13 alternatively with the circuit of the service brake 18 (deactivated pump device 11) or with the circuit of the parking brake (activated pump device).

. According to a preferred embodiment, the actuating member 15 is a hydraulic actuator having a body 38 axially coupled to body 22 of the main cylinder and a piston 39 with a stem 39' directly abutted on the first piston 23. Said piston 39 can be urged by an elastic means 60 to stay and return to rear position corresponding to the deactivated pump device 11.

. The control means of the pump device comprise an electronic control unit 40 adapted for receiving a command for activating and deactivating the parking brake by a user, a delivery line 41 of the control fluid from a tank 42 towards the hydraulic actuator 15 and a backflow line 43 of the control fluid from the hydraulic actuator 15 to said tank 42.

. Advantageously, the control fluid is fed to the hydraulic actuator 15 by a pump 44 provided along the delivery line 41 and controlled by the electronic unit 40. Pump 44 feeds a pressure accumulator 45 provided along the delivery line of the control fluid and to which minimum and maximum pressure sensors 46 are associated, adapted for activating and deactivating, respectively, the recharge thereof by pump 44.

. According to a preferred embodiment, the delivery line 41 and the backflow line 43 are controlled by respective solenoid valves 47, 48, for example of the normally closed type, controlled by the electronic control unit 40.

. Finally, along the delivery 41 and/or backflow lines 43 of the control fluid circuit, at least one pressure sensor 49 may be provided.

. The operation of the hydraulic parking brake according to the present invention is as follows.

. When the parking brake is not actuated by a user, solenoid valves 47, 48 on the delivery and backflow lines of the control fluid are closed so that the hydraulic actuator 15 of the pump device 11 does not receive fluid under pressure and is therefore in an inactive rear position. As a consequence, also the pistons inside the main cylinder are in rear position and the relevant valve means are in open configuration of the passages inside the pistons. In this configuration, the pump device places in fluid communication circuit 18 connected to the actuator of the service brake 19 with the brake calipers 13, and therefore is not influencing relative to the service brake circuit. In other words, the pressure exerted by the actuator of the service rake 19 is transmitted to the brake calipers 13 passing through the pump device 11.

. When a user presses a button for actuating the parking brake, the solenoid valve 47 on the delivery line 41 opens whereas that on the backflow line remains closed. In this way, the fluid under pressure inside the pressure accumulator 45 is delivered to the hydraulic actuator 15 of the pump device 11, making piston 39 move forward. When the pressure of the control fluid in the pump device 11 reaches the predetermined pressure, for example 40 bar, the solenoid valve 47 closes again.

. If the pressure of the control fluid in the pressure accumulator 45 is not at the minimum required value, also pump 44 intervenes for recharging the accumulator by drawing control fluid from tank 42.

. The forward motion of piston 39 of the hydraulic actuator 15 in turn makes the first and the second piston 23, 24 move forward into the main cylinder 21. As a consequence of such forward movement, the valve means 34 close and circuit 18 of the service brake is isolated from the brake calipers 13. The forward movement of the pistons, on the other hand, causes the delivery of the fluid inside the first and the second chamber 25, 27 of the main cylinder to the respective brake calipers at the predetermined pressure. The pump device thus acts as a real pump for applying fluid under pressure to the calipers at the pressure set for the parking brake.

. When the user applies a signal for deactivating the parking brake to the electronic control unit 40, the solenoid valve 47 on the delivery line remains closed whereas the solenoid valve 48 on the backflow line opens, thus allowing the fluid into the hydraulic actuator to discharge into tank 42. The elastic means 23', 24' into the main cylinder, and optionally into the hydraulic actuator, return the pump device 11 to the inactive rear position.

. In an embodiment illustrated in figure 4, downstream of valves 47, 48, a device 70 is provided for limiting the overpressures of the control fluid of the parking brake that could occur due, for example, to differences in temperature between night and day. In fact, it has been found that a high difference in temperature can cause a pressure rise of even twice the predetermined optimum value. Such rise negatively affects especially the seals of the brake calipers 13, thus damaging them.

. Said limiting device 70 comprises a pressure accumulator 71 in fluid communication with the feeding line of the hydraulic actuator 15 through a delivery line 72 of the control fluid from accumulator 71 to said actuator 15 and a backflow line 73 from the actuator to the accumulator. Along the delivery line 72, a first unidirectional valve 74 is provided, calibrated so as to remain closed when pressure in the hydraulic actuator 15 is more than or equal to a predetermined optimum value, for example 40 bar, and open when pressure drops below said optimum value.

. Similarly, along the backflow line 73, a second unidirectional valve 75 is provided, calibrated so as to remain closed when pressure in the hydraulic actuator 15 is less than a predetermined maximum value, for example 60 bar, and open when pressure reaches or exceeds said maximum value.

. In the practice, in normal conditions, the two unidirectional valves 74, 75 are closed and the pressure accumulator 71 is isolated from the hydraulic actuator 15. If due, for example, to a difference in temperature, pressure in the hydraulic actuator 15 reaches or exceeds the predetermined maximum value, valve 75 on the backflow line opens so that the control fluid in the hydraulic actuator 15 discharges into accumulator 71 until the pressure drops below the maximum value.

. If, on the other hand, the parking brake pressure drops below the optimum value, for example due to a temperature drop, the fluid pressure in the accumulator exceeds that in the hydraulic actuator, thus opening valve 74 on the delivery line. The control fluid therefore moves from accumulator 71 to the hydraulic actuator 15, restoring the optimum pressure value.

. In an embodiment illustrated in figure 5, the hydraulic section of the pump device, rather than being made as a single main cylinder, comprises two main cylinders 61, each defining a respective chamber for the control fluid having an outlet towards at least one respective caliper 13 or towards the ABS unit 50. Each cylinder slidingly houses a respective piston having a body as described hereinbefore, that is, defining an interspace adapted for receiving the control fluid coming from the actuator of the service brake and defining a passage adapted for placing in fluid communication said interspace with the containment chamber of the control fluid. The piston is associated with the valve means described above for open/close said passage according to the piston position.

. The two pistons of the pump device are actuable in parallel by a single actuating member 62 and are stressed to remain in or to return to an inactive rear position by respective elastic means 63.

. The operation of the parking brake in this embodiment is similar to the previous one, but it can be regarded as even safer, thanks to the splitting of the main cylinder into two independent bodies, which allows limiting the damages in the event of a failure of a delivery circuit of the control fluid to the calipers. In fact, unlike the embodiment with a single cylinder, in the event of a failure of one of the two caliper feeding circuits, the operation of the other circuit is not altered.

. According to a further embodiment not comprising the inventive device for limiting the over pressure illustrated in the diagram of figure 6, wherein components similar to those described above are indicated with the same reference numerals, the parking brake, rather than comprising a single pump device 11 adapted for feeding all brake calipers of the wheels of a vehicle, is provided with a pump device 80 associated to each caliper. Each of said devices, only schematically illustrated, exhibits a single inlet for circuit 18 of the service brake 19 and a single outlet towards the respective brake caliper 13.

. Said device 80 comprises an actuating member and a hydraulic section consisting of a main cylinder with single piston and single chamber. The electrical-hydraulic control circuit of the pump devices is similar to that described hereinbefore with the difference that as many delivery lines 41 of the fluid under pressure branch off the pressure accumulator 45 as the pump devices 80.

. It is clear that a man skilled in the art can make several changes and adjustments to the parking brake described above in order to meet specific and incidental needs, all falling within the scope of protection defined in the following claims.

## Claims

1. A hydraulic parking brake comprising a pump device (11; 80) for feeding at a predetermined pressure a control fluid to at least one brake caliper (13) associated to a vehicle wheel, and control means (14) actuable by a user for activating/deactivating said pump device for applying and releasing the parking brakes, wherein said pump device comprises an actuating member (15; 62) actuable from said control means and a hydraulic section (16) containing the control fluid and having at least one outlet (20) towards said at least one caliper and at least one inlet (17) for the connection to a circuit (18) of the control fluid coming from an actuator of the service brake (19) , said hydraulic section being provided with inlet selection means which, when the pump device is activated, are urged by said actuating member to close said at least one inlet for allowing the pump device to exert the predetermined pressure and, when the pump device is deactivated, open said at least one inlet for placing the circuit of the control fluid coming from the service brake actuator in fluid communication with the at least one brake calliper; said hydraulic parking brake being **characterised by** a device (70) for limiting the overpressure adapted for keeping the pressure of the control fluid in the pump device within a predetermined range; said device (70) comprises a pressure accumulator (71) in fluid communication with the feeding line of the hydraulic actuator (15) through a delivery line (72) of the control fluid from accumulator (71) to said actuator (15) and a backflow line (73) from the actuator to the accumulator, along each line there being provided a respective unidirectional valve (74, 75), the unidirectional valve (74) along the delivery line (72) allowing the control fluid to flow from the accumulator (71) to the actuating member (15), the unidirectional valve (75) along the backflow line (73) allowing the control fluid to flow from the actuating member (15) to the accumulator (71).

2. A parking brake according to claim 1, wherein the hydraulic section of the pump device comprises at least one main cylinder (21; 61) having a body defining at least one chamber (25, 27) containing the control fluid, the at least one inlet of the circuit of the control fluid coming from the actuator of the service brake and the at least one outlet of said fluid from said chamber towards the at least one brake caliper being obtained in said body.

3. A parking brake according to claim 2 , wherein said selection means comprise:
- valve means (34, 37) housed into said body and capable of switching from an open configuration, wherein said inlet and said outlet are placed in fluid communication, and a closed configuration, wherein said inlet and said outlet are in fluid isolation from each other; and
- piston means (23, 24) slidingly housed into said body, cooperating with said valve means and movable between a rear position corresponding to deactivated pump device, wherein said valve means are in open configuration, and a forward position, corresponding to activated pump device, wherein said valve means are in closed configuration for placing the control fluid under pressure in the at least one chamber.

4. A parking brake according to claim 3 , wherein said actuating member (15; 62) is operatively connected to the hydraulic section (16) for moving the piston means.

5. A parking brake according to claim 4 , wherein said actuating member is a hydraulic actuator.

6. A parking brake according to any one of the previous claims, wherein said control means of the actuating member are electrical actuation means.

7. A parking brake according to claim 5 , wherein said control means comprise an electronic control unit (40) adapted for receiving a command for activating and deactivating the parking brake by a user, a delivery line (41) of the control fluid from a tank (42) towards the hydraulic actuator and a backflow line (43) of the control fluid from the hydraulic actuator to the tank.

8. A parking brake according to claim 7, wherein the control fluid is fed to the hydraulic actuator by a pump (44) provided along the delivery line and controlled by said electronic control unit.

9. A parking brake according to claim 8, wherein said pump (44) feeds a pressure accumulator (45) provided along the delivery line of the control fluid.

10. A parking brake according to claim 7, 8 or 9, wherein along the delivery line and the backflow line there are provided respective solenoid valves (47, 48) controlled by the electronic control unit (40) , the solenoid valve (47) along the delivery line being controlled to open when the parking brake is activated to allow the pressurisation of the hydraulic actuator, the solenoid valve (48) along the backflow line being controlled to open when the parking brake is deactivated to allow the discharge of the control fluid from said hydraulic actuator.

11. A parking brake according to claim 10, wherein said solenoid valves are normally closed solenoid valves.

12. A parking brake according to any one of claims from 7 to 11, wherein the control means of the hydraulic actuator comprise a pressure sensor (49) adapted for sensing the pressure value of the control fluid.

13. A parking brake according to claim 9, wherein along the delivery line there are provided minimum and maximum pressure sensors (46) adapted for activating and deactivating, respectively, the recharge of the pressure accumulator.

14. A parking brake according to claim 1, wherein the unidirectional valve (74) on the delivery line is calibrated so as to remain closed when pressure in the hydraulic actuator (15) is more than or equal to a predetermined optimum value and open when pressure drops below said optimum value.

15. A parking brake according to claim 1, wherein the unidirectional valve (75) on the backflow line is calibrated so as to remain closed when pressure in the hydraulic actuator (15) is less than a predetermined maximum value and open when pressure reaches or exceeds said maximum value.

16. A parking brake according to any one of the previous claims, wherein the hydraulic section of the pump device comprises a single main cylinder (21) in whose body there are housed a first and a second piston (23, 24), arranged in series and spaced so as to define between them and with a head of said cylinder a first and a second chamber (25, 27), respectively, for the control fluid.

17. A parking brake according to claim 16, wherein the first piston and the second piston are actuated in tandem by the actuating member (15).

18. A parking brake according to claim 17, wherein between the first and the second piston and the cylinder head there are interposed first and second elastic means (23', 24'), respectively, adapted for normally keeping said pistons into inactive rear position.

19. A parking brake according to claim 18, wherein the body of the main cylinder is axially coupled to the actuating member.

20. A parking brake according to claim 19, wherein the actuating member comprises a piston (39) having a stem (39') axially abutted on piston means of the main cylinder.

21. A parking brake according to any one of claims from 1 to 12, wherein the hydraulic section comprises two main cylinders (61) , each defining a respective chamber for the control fluid and housing a respective piston and respective valve means, the two pistons being actuated in parallel by a single actuating member (62).

22. A parking brake according to any one of the previous claims, wherein each chamber of the control fluid feeds two brake calipers.

23. A parking brake according to any one of the previous claims, wherein each chamber of the control fluid feeds an ABS unit (50).

24. A parking brake according to claim 1, comprising a pump device (80) for each wheel of a vehicle.

25. A parking brake according to any one of the previous claims, wherein each piston means comprises a body having two end portions (29) sealingly coupled with the inner surface of the cylinder body and delimiting thereinbetween a central portion (30) of smaller diameter than that of said body of the main cylinder so as to define an interspace (31) communicating with a respective inlet (17) of the control fluid from the service brake circuit.

26. A parking brake according to claim 25, wherein each interspace communicates with a respective chamber of the control fluid through a passage (32) obtained in the piston means, the valve means being adapted for opening/closing said passage.

27. A parking brake according to claim 26, wherein each of said passages in the piston means communicates with a longitudinal slit (33') obtained in each piston (23, 24) and housing a stop pin (33) that engages in the body of the respective main cylinder for limiting the movement in rear position of said piston means, and wherein said valve means comprise a shutter (34) influenced by elastic means (35) for closing a respective valve seat (36) obtained in said passage, and a stem (37) that extends from said shutter into said passage so as to abut against said stop pin (33) opening the valve seat (36) under the strength of said elastic means, when said piston means are in rear position.

## Patentansprüche

1. Hydraulische Feststellbremse umfassend eine Pumpenvorrichtung (11; 80) zum Zuführen eines Steuerfluids bei einem vorbestimmten Druck an wenigstens einen Bremssattel (13), der einem Fahr-zeugrad zugeordnet ist, und Steuermittel (14), die durch einen Benutzer zum Aktivieren/ Deaktivieren der Pumpenvorrichtung zum Betätigen und Lösen der Feststellbremsen betätigbar sind, wobei die Pumpenvorrichtung ein Betätigungselement (15; 62), das durch die Steuermittel betätigbar ist, und einen Hydraulikabschnitt (16) umfasst, der das Steuerfluid beinhaltet und wenigstens einen Auslass (20) zu dem wenigstens einen Bremssattel und wenigstens einen Einlass (17) zum Verbinden mit einem Schaltkreis (18) des Steuerfluids, das von einem Aktuator der Betriebsbremse (19) kommt, aufweist, wobei der Hydraulikabschnitt mit Einlassauswahlmitteln versehen ist, die, wenn die Pumpenvorrichtung aktiviert ist, durch das Betätigungselement zum Schließen des wenigstens einen Einlasses be-aufschlagt sind, um zu ermöglichen, dass die Pumpenvorrichtung den vorbe-stimmten Druck ausübt, und um, wenn die Pumpenvorrichtung deaktiviert ist, den wengistens einen Einlass zu öffnen, um den Schaltkreis des Steuerfluids, das von dem Betriebsbremsenaktuator kommt, mit dem wenigstens einen Bremssattel in Flüssigkeitsverbindung zu bringen, wobei die hydraulische Feststellbremse durch eine Vorrichtung (70) zum Begrenzen des Überdrucks **gekennzeichnet** ist, die so ausgebildet ist, dass der Druck des Steuerfluids in der Pumpenvorrichtung innerhalb eines vorbestimmten Bereichs gehalten wird, wobei die Vorrichtung (70) einen Druckspeicher (71), der mit der Zuflussleitung des hydraulischen Aktuators (15) durch eine Zuflussleitung (72) des Steuerfluids von dem Druckspeicher (71) zu dem Aktuator (15) in Flüssigkeitsverbindung steht, und eine Rückflussleitung (73) von dem Aktuator zu dem Speicher umfasst, wobei entlang jeder Leitung jeweils ein Einrichtungsventil (74, 75) vorgesehen ist, wobei das Einrichtungsventil (74) entlang der Zuflussleitung (72) den Fluss des Steuerfluids von dem Speicher (71) zu dem Betätigungselement (15) erlaubt und wobei das Einrichtungsventil (75) entlang der Rückflussleitung (73) den Fluss des Steuerfluids von dem Aktuator (15) zu dem Speicher (71) erlaubt.

2. Feststellbremse gemäß Anspruch 1, wobei der Hydraulikabschnitt der Pum-penvorrichtung wenigstens einen Hauptzylinder (21; 61), der einen Körper aufweist, der wenigstens eine Kammer (25, 27) bildet, die das Steuerfluid ent-hält, den wenigstens einen Einlass des Schaltkreises des Steuerfluids, das von dem Aktuator der Betriebsbremse kommt, und den wenigstens einen Auslass des Fluids von der Kammer zu dem wenigstens einen Bremssattel, der in dem Körper enthalten ist, umfasst.

3. Feststellbremse gemäß Anspruch 2, wobei die Auswahlmittel:
- Ventilmittel (34, 37), die in dem Körper aufgenommen und in eine Offen-stellung, bei der der Einlass und der Auslass miteinander in Flüssigkeits-verbindung stehen, und in eine Schließstellung, bei der der Einlass und der Auslass voneinander getrennt sind, schaltbar sind, und
- Kolbenmittel (23, 24), die in dem Körper gleitend aufgenommen sind, die mit den Ventilmitteln zusammenwirken und zwischen einer rückwärtigen Position, die der Deaktivierung der Pumpenvorrichtung entspricht, wobei die Ventilmittel sich in der Offenstellung befinden, und einer vorderen Position, die der Aktivierung der Pumpenvorrichtung entspricht, bewegbar sind,
wobei die Ventilmittel sich in der Schließstellung befinden, um das Steuerfluid in der wenigstens einen Kammer unter Druck zu setzen, umfassen.

4. Feststellbremse gemäß Anspruch 3, wobei das Betätigungselement (15; 62) mit dem Hydraulikabschnitt (16) zum Bewegen der Kolbenmittel wirkungsmäßig verbunden ist.

5. Feststellbremse gemäß Anspruch 4, wobei das Betätigungselement ein hyd-raulischer Aktuator ist.

6. Feststellbremse gemäß irgend einem der vorangehenden Ansprüche, wobei die Steuermittel des Betätigungselements elektrische Betätigungsmittel sind.

7. Feststellbremse gemäß Anspruch 5, wobei die Steuermittel eine elektronische Steuereinheit (40), die zum Empfangen eines Befehls zum Aktivieren und Deaktivieren der Feststellbremse durch einen Nutzer ausgebildet ist, eine Zuflussleitung (41) des Steuerfluids von einem Tank (42) zu dem hydraulischen Aktuaktor und eine Rückflussleitung (43) des Steuerfluids von dem hydraulischen Aktuator zu dem Tank umfassen.

8. Feststellbremse gemäß Anspruch 7, wobei das Steuerfluid zu dem hydraulischen Aktuator durch eine Pumpe (44), die entlang der Zuflussleitung vorgesehen ist und durch die elektronische Steuereinheit geregelt wird, gefördert wird.

9. Feststellbremse gemäß Anspruch 8, wobei die Pumpe (44) einen Druckspeicher (45), der entlang der Zuflussleitung des Steuerfluids vorgesehen ist, speist.

10. Feststellbremse gemäß Anspruch 7, 8 oder 9, wobei entlang der Zuflussleitung und der Rückflussleitung jeweils Soleniodventile (47, 48) vorgesehen sind, die durch die elektronische Steuereinheit (40) angesteuert werden, wobei das Soleniodventil (47) entlang der Zuflussleitung offen geschaltet wird, wenn die Feststellbremse aktiviert wird, um die Druckbeaufschlagung des hydraulischen Aktuators zu ermöglichen, und wobei das Soleniodventil (48) entlang der Rückflussleitung so angesteuert wird, dass es öffnet, wenn die Feststellbremse deaktiviert wird, um zu ermöglichen, dass das Steuerfluid von dem hydraulischen Aktuator abgeleitet wird.

11. Feststellbremse gemäß Anspruch 10, wobei die Soleniodventile normalerweise geschlossene Soleniodventile sind.

12. Feststellbremse gemäß irgend einem der Ansprüche 7 bis 11, wobei die Steuermittel des hydraulischen Aktuators einen Drucksensor (49) umfassen, der zum Messen des Druckwerts des Steuerfluids ausgebildet ist.

13. Feststellbremse gemäß Anspruch 9, wobei entlang der Zuflussleitung Minimum- und Maximumdrucksensoren (46) vorgesehen sind, die zum Aktivieren und Deaktivieren des Auffüllens des Druckspeichers ausgebildet sind.

14. Feststellbremse gemäß Anspruch 1, wobei das Einrichtungsventil (74) an der Zuflussleitung derart geschaltet ist, dass es geschlossen bleibt, wenn der Druck in dem hydraulischen Aktuator (15) größer oder gleich dem vorbestimmten optimalen Wert ist, und offen bleibt, wenn der Druck unterhalb des optimalen Werts fällt.

15. Feststellbremse gemäß Anspruch 1, wobei das Einrichtungsventil (75) an der Rückflussleitung derart eingestellt ist, dass es geschlossen bleibt, wenn der Druck in dem hydraulischen Aktuator (15) weniger als ein vorbestimmter ma-ximaler Wert ist, und offen bleibt, wenn der Druck den maximalen Wert erreicht oder überschreitet.

16. Feststellbremse gemäß irgend einem der vorangehenden Ansprüche, wobei der Hydraulikabschnitt der Pumpenvorrichtung einen einzelnen Hauptzylinder (21) umfasst, in dessen Körper ein erster und ein zweiter Kolben (23, 24) auf-genommen sind, die in Reihe angeordnet und so voneinander beabstandet sind, dass zwischen diesen und einem Kopf des Zylinders eine erste und eine zweite Kammer (25, 27) für das Steuerfluid gebildet werden.

17. Feststellbremse gemäß Anspruch 16, wobei der erste Kolben und der zweite Kolben im Tandembetrieb durch das Betätigungselement (15) betätigt werden.

18. Feststellbremse gemäß Anspruch 17, wobei zwischen dem ersten und dem zweiten Kolben und dem Zylinderkopf erste und zweite elastische Mittel (23', 24') vorgesehen sind, die so ausgebildet sind, dass sie normalerweise die Kolben in der inaktivien rückwärtigen Position halten.

19. Feststellbremse gemäß Ansrpuch 18, wobei der Körper des Hauptzylinders mit dem Betätigungselement axial verbunden ist.

20. Feststellbremse gemäß Anspruch 19, wobei das Betätigungselement einen Kolben (39) umfasst, der einen Schaft (39') aufweist, der gegen die Kolbenmittel des Hauptzylinders axial anliegt.

21. Feststellbremse gemäß irgend einem der Ansprüche 1 bis 12, wobei der Hyd-raulikabschnitt zwei Hauptzylinder (61) umfasst, die jeweils eine Kammer für das Steuerfluid bilden und jeweils einen Kolben und Ventilmittel aufnehmen, wobei die zwei Kolben parallel zueinander durch ein einziges Betätigungselement (62) betätigt werden.

22. Feststellbremse gemäß irgend einem der vorangehenden Ansprüche, wobei jede Kammer des Steuerfluids zwei Bremssättel speist.

23. Feststellbremse gemäß irgend einem der vorangehenden Ansprüche, wobei jede Kammer des Steuerfluids eine ABS-Einheit (50) speist.

24. Feststellbremse gemäß Anspruch 1, umfassend eine Pumpenvorrichtung (80) für jedes Rad eines Fahrzeugs.

25. Feststellbremse gemäß irgend einem der vorangehenden Ansprüche, wobei jedes Kolbenmittel einen Körper umfasst, der zwei Endabschnitte (29) aufweist, die mit der Innenfläche des Zylinderkörpers dicht verbunden sind und dazwischen einen zentralen Abschnitt (30) kleineren Durchmessers als der des Körpers des Hauptzylinders derart begrenzen, dass ein Zwischenraum (31) gebildet wird, der mit einem jeweiligen Einlass (17) des Steuerfluids des Betriebsbrem-senschaltkreises verbunden ist.

26. Feststellbremse gemäß Anspruch 25, wobei jeder Zwischenraum mit einer je-weiligen Kammer des Steuerfluids mittels eines Durchlasses (32) verbunden ist, der in den Kolbenmitteln vorgesehen ist, wobei die Ventilmittel zum Öffnen/ Schließen des Durchlasses ausgebildet sind.

27. Feststellbremse gemäß Anspruch 26, wobei jeder der Durchlässe in den Kol-benmitteln mit einem Längsschlitz (33') verbunden ist, der in jedem Kolben (23, 24) vorgesehen ist und einen Sperrstift (33) aufnimmt, der in dem Körper des jeweiligen Hauptzylinders zum Begrenzen der Bewegung zu der rückwärtigen Position der Kolbenmittel eingreift, und wobei die Ventilmittel einen Verschluss (34), der durch die elastischen Mittel (35) zum Schließen eines jeweiligen Ventilsitzes (36) beeinflusst wird, und einen Schaft (37) umfassen, der sich von dem Verschluss in den Durchlass derart erstreckt, dass er gegen den Sperrstift (33) zur Anlage kommt, der den Ventilsitz (36) unter der Kraft der elastischen Mittel öffnet, wenn die Kolbenmittel sich in der rückwärtigen Position befinden.

## Revendications

1. Frein de stationnement hydraulique comprenant un dispositif de pompe (11; 80) destiné à fournir un fluide de commande sous une pression prédéterminée à au moins un étrier de frein (13) associé à une roue d'un véhicule, et des moyens de commande (14) qui peuvent être actionnés par un utilisateur et destinés à activer / désactiver ledit dispositif de pompe de façon à appliquer et à relâcher le frein de stationnement, dans lequel ledit dispositif de pompe comprend un élément d'actionnement (15; 62) qui peut être actionné par lesdits moyens de commande et une section hydraulique (16) qui contient le fluide de commande et qui présente au moins une sortie (20) vers ledit ou lesdits étriers et au moins une entrée (17) destinée à un raccordement à un circuit (18) du fluide de commande qui provient d'un actionneur du frein de service (19), ladite section hydraulique étant dotée de moyens de sélection d'entrée qui sont poussés, lorsque le dispositif de pompe est activé, par ledit élément d'actionnement de façon à fermer ladite au moins une entrée de manière à permettre au dispositif de pompe d'exercer la pression prédéterminée et à ouvrir, lorsque le dispositif de pompe est désactivé, ladite ou lesdites entrées de manière à placer circuit du fluide de commande qui provient de l'actionneur du frein de service en communication de fluide avec le ou les étriers de frein; un dispositif (70) destiné à limiter la surpression et adapté pour maintenir la pression du fluide de commande dans le dispositif de pompe à l'intérieur d'une plage prédéterminée; ledit frein de stationnement hydraulique étant **caractérisé par** ledit dispositif (70) comprend un accumulateur de pression (71) en commu-nication de fluide avec la conduite d'alimentation de l'actionneur hydraulique (15) par l'intermédiaire d'une conduite de distribution (72) du fluide de commande qui va dudit accumulateur (71) audit actionneur (15) et d'une conduite de refoulement (73) qui va de l'actionneur à l'accumulateur, dans chaque conduite, il est prévu une soupape unidirectionnelle respective (74, 75), la soupape unidirection-nelle (74) présente dans la conduite de distribution (72) permettant au fluide de commande de circuler à partir de l'accumulateur (71) vers l'élément d'actionnement (15), la soupape unidirectionnelle (75) présente dans la conduite de refoulement (73) permettant au fluide de commande de circuler à partir de l'élément d'actionnement (15) vers l'accumulateur (71).

2. Frein de stationnement selon la revendication 1, dans lequel la section hydraulique du dispositif de pompe comprend au moins un cylindre principal (21 ; 61) qui présente un corps qui définit au moins une chambre (25, 27) qui contient le liquide de commande, la ou les entrées du circuit du fluide de commande en provenance de l'action-neur du frein de service et la ou les sorties dudit fluide en provenance de ladite chambre vers le ou les étriers de frein, étant réalisées dans ledit corps.

3. Frein de stationnement selon la revendication 2, dans lequel lesdits moyens de sélection comprennent :
- des moyens de soupape (34, 37) logés dans ledit corps et capables de commuter entre une configuration ouverte, dans laquelle ladite entrée et ladite sortie sont mises en communication de fluide, et une configuration fermée, dans laquelle ladite entrée et ladite sortie se trouvent en isolation de fluide l'une de l'autre ; et
- des moyens de piston (23, 24) logés de manière coulissante dans ledit corps, qui coopèrent avec lesdits moyens de soupape et qui sont mobiles entre une position arrière qui correspond à la désactivation du dispositif de pompe, dans laquelle lesdits moyens de soupape présentent une configuration ouverte, et une position avant qui correspond à l'activation du dispositif de pompe, dans laquelle lesdits moyens de soupape présentent une configuration fermée destinée à placer le liquide de commande sous pression dans la ou les chambres.

4. Frein de stationnement selon la revendication 3, dans lequel ledit élément d'actionnement (15; 62) est connecté de manière opération-nelle à la section hydraulique (16) afin de déplacer les moyens de piston.

5. Frein de stationnement selon la revendication 4, dans lequel ledit élément d'actionnement est un actionneur hydraulique.

6. Frein de stationnement selon l'une quelconque des revendications précédentes, dans lequel lesdits moyens de commande de l'élément d'actionnement sont des moyens d'actionnement électriques.

7. Frein de stationnement selon la revendication 5, dans lequel lesdits moyens de commande comprennent une unité de commande électro-nique (40) adaptée pour recevoir une commande destinée à activer et à désactiver le frein de stationnement par un utilisateur, une conduite de distribution (41) du fluide de commande qui va d'un réservoir (42) vers l'actionneur hydraulique et une conduite de refoulement (43) du fluide de commande qui va du vérin hydraulique vers le réservoir.

8. Frein de stationnement selon la revendication 7, dans lequel le fluide de commande est fourni à l'actionneur hydraulique par une pompe (44) disposée sur la conduite de distribution et commandée par ladite unité de commande électronique.

9. Frein de stationnement selon la revendication 8, dans lequel ladite pompe (44) alimente un accumulateur de pression (45) disposé dans la conduite de distribution du fluide de commande.

10. Frein de stationnement selon l'une quelconque des revendications 7, 8 ou 9, dans lequel il y a, dans la conduite de distribution et dans la conduite de refoulement, des soupapes à solénoïde respectives (47, 48) commandées par l'unité de commande électronique (40), la soupape à solénoïde (47) située dans la conduite de distribution étant comman-dée de manière à s'ouvrir lorsque le frein de stationnement est activé de façon à permettre la mise sous pression de l'actionneur hydraulique, la soupape à solénoïde (48) située dans la conduite de refoule-ment étant commandée de manière à s'ouvrir lorsque le frein de stationnement est désactivé de façon à permettre l'évacuation du fluide de commande dudit actionneur hydraulique.

11. Frein de stationnement selon la revendication 10, dans lequel lesdites soupapes à solénoïde sont des soupapes à solénoïde normale-ment fermées.

12. Frein de stationnement selon l'une quelconque des revendications 7 à 11, dans lequel les moyens de commande de l'actionneur hydrau-lique comprennent un capteur de pression (49) adapté pour détecter la valeur de la pression du fluide de commande.

13. Frein de stationnement selon la revendication 9, dans lequel il y a, dans la conduite de distribution, des capteurs de pression minimum et maximum (46) adaptés pour activer et désactiver, respectivement, la recharge de l'accumulateur de pression.

14. Frein de stationnement selon la revendication 1, dans laquelle la soupape unidirectionnelle (74) située sur la conduite de distribution est calibrée de façon à rester fermée lorsque la pression dans l'action-neur hydraulique (15) est supérieure ou égale à une valeur optimum prédéterminée et à s'ouvrir lorsque la pression chute en dessous de ladite valeur optimum.

15. Frein de stationnement selon la revendication 1, dans laquelle la soupape unidirectionnelle (75) située sur la conduite de refoulement est calibrée de façon à rester fermée lorsque la pression dans l'action-neur hydraulique (15) est inférieure à une valeur maximum prédéter-minée et à s'ouvrir lorsque la pression atteint ou dépasse ladite valeur maximum.

16. Frein de stationnement selon l'une quelconque des revendications précédentes, dans lequel la section hydraulique du dispositif de pompe comprend un seul cylindre principal (21) dans le corps duquel sont logés un premier et un second pistons (23, 24), agencés en série et espacés de manière à définir entre eux et avec la culasse dudit cylindre des première et seconde chambres (25, 27), respectivement, pour le fluide de commande.

17. Frein de stationnement selon la revendication 16, dans lequel le premier piston et le second piston sont actionnés en tandem par l'élé-ment d'actionnement (15).

18. Frein de stationnement selon la revendication 17, dans lequel sont interposés, entre les premier et second pistons et la culasse, des premier et second moyens élastiques (23', 24'), respectivement, adap-tés pour garder normalement lesdits pistons dans une position arrière inactive.

19. Frein de stationnement selon la revendication 18, dans lequel le corps du cylindre principal est couplé de manière axiale à l'élément d'actionnement.

20. Frein de stationnement selon la revendication 19, dans lequel l'élément d'actionnement comprend un piston (39) qui présente une tige (39') qui vient en butée de manière axiale sur les moyens de piston du cylindre principal.

21. Frein de stationnement selon l'une quelconque des revendications 1 à 12, dans lequel la section hydraulique comprend deux cylindres principaux (61), chacun d'eux définissant une chambre respective pour le fluide de commande et logeant un piston respectif et des moyens de soupape respectifs, les deux pistons étant actionnés en parallèle par un seul élément d'actionnement (62).

22. Frein de stationnement selon l'une quelconque des revendications précédentes, dans lequel chaque chambre du fluide de commande ali-mente deux étriers de frein.

23. Frein de stationnement selon l'une quelconque des revendications précédentes, dans lequel chaque chambre du fluide de commande alimente une unité ABS (50).

24. Frein de stationnement selon la revendication 1, comprenant un dispositif de pompe (80) pour chaque roue d'un véhicule.

25. Frein de stationnement selon l'une quelconque des revendications précédentes, dans lequel chacun des moyens de piston comprend un corps qui présente deux parties d'extrémité (29) couplées de manière étanche à la surface intérieure du corps de cylindre et délimitant entre elles une partie centrale (30) qui présente un diamètre plus petit que celui dudit corps de cylindre principal de façon à définir un intervalle (31) qui communique avec une entrée respective (17) du fluide de commande du circuit du frein de service.

26. Frein de stationnement selon la revendication 25, dans lequel chaque intervalle communique avec une chambre respective du fluide de commande par l'intermédiaire d'un passage (32) réalisé dans les moyens de piston, les moyens de soupape étant adaptés pour ouvrir / fermer ledit passage.

27. Frein de stationnement selon la revendication 26, dans lequel chacun desdits moyens de piston communique avec une fente longitu-dinale (33') réalisée dans chaque piston (23, 24) et loge une broche d'arrêt (33) qui vient en prise dans le corps du cylindre principal respectif de façon à limiter le déplacement dans la position arrière desdits moyens de piston, et dans lequel lesdits moyens de soupape comprennent un volet obturateur (34) influencé par les moyens élastiques (35) afin de fermer un siège de soupape respectif (36) réalisé dans ledit passage, et une tige (37) qui s'étend à partir dudit volet obturateur dans ledit passage de manière à venir en butée contre ladite broche d'arrêt (33) en ouvrant le siège de soupape (36) sous la force desdits moyens élastiques, lorsque lesdits moyens de piston se trouvent dans une position arrière.
